Europäisches Patentamt

European Patent Office

Office européen des brevets

(11) Veröffentlichungsnummer: **0 376 109**
**A2**

## (12) EUROPÄISCHE PATENTANMELDUNG

(21) Anmeldenummer: 89123342.1

(22) Anmeldetag: **18.12.89**

(51) Int. Cl.⁵· **G01N 35/00**

(30) Priorität: **28.12.88 DE 3844105**

(43) Veröffentlichungstag der Anmeldung:
**04.07.90 Patentblatt 90/27**

(84) Benannte Vertragsstaaten:
**AT BE CH DE ES FR GB GR IT LI LU NL SE**

(71) Anmelder: **BOEHRINGER MANNHEIM GMBH**
**Sandhofer Strasse 116**
**D-6800 Mannheim 31(DE)**

(72) Erfinder: **Haar, Hans-Peter, Dr.**
**Starenweg 2**
**D-8120 Weinheim(DE)**
Erfinder: **Degenhardt, Volker, Dipl.-Ing.**
**Rudolf-Diesel-Strasse 6**
**D-6140 Bensheim(DE)**
Erfinder: **Schüssler, Rudolf**
**Oberlacher Strasse 20**
**D-6840 Lampertheim(DE)**

(74) Vertreter: **Pfeifer, Hans-Peter, Dr.rer.nat.**
**Patentanwalt Nowackanlage 15**
**D-7500 Karlsruhe 1(DE)**

(54) **Testträger-Analysesystem.**

(57) Testträger-Analysesystem zur Analyse von Bestandteilen einer flüssigen Probe, insbesondere einer Körperflüssigkeit.

Das Analysesystem besteht aus Testträgern (2) mit einer Nachweisschicht (4), einem Auswertegerät (1) und einem Codeträger (3), der Informationen zur Auswertung des Testträgers trägt. Das Auswertegerät hat einen Codeleser (7) zum Lesen der auf dem Codeträger (3) gespeicherten Information.

Um bei einem derartigen Testträger-Analysesystem zwecks Erhöhung der Auswertegenauigkeit die Übermittlung einer großen Informationsmenge bei gleichzeitig einfachem Aufbau und kostengünstiger Herstellbarkeit des Auswertegerätes (1) sicherzustellen, weist der Codeleser (7) zum Lesen eines auf dem Codeträger (3) vorhandenen Magnetcodes ein magnetoresistives Element als Lesekopf auf.

Fig. 1

EP 0 376 109 A2

## Testträger-Analysesystem

Die Erfindung betrifft ein Testträger-Analysesystem zur Analyse von Bestandteilen einer flüssigen Probe, insbesondere einer Körperflüssigkeit mit Testträgern, welche in einer oder mehreren Testschichten Reagenzien enthalten, wobei die Reaktion der Reagenzien mit dem Bestandteil zu einer physikalisch nachweisbaren Veränderung einer Nachweisschicht führt, einem Codeträger, der Informationen zur Auswertung der nachweisbaren physikalischen Veränderung und Bestimmung der Konzentration des zu analyisierenden Bestandteils enthält und einem Auswertegerät, das eine Meßeinrichtung zum Messen der nachweisbaren Veränderung und Erzeugen eines Meßsignals, einen Codeleser zum Lesen der auf dem Codeträger gespeicherten Information und eine Meß- und Auswerteschaltung zur Auswertung des Meßsignals und Ermittlung der Konzentration des zu analysierenden Bestandteils mit Hilfe der gespeicherten Information, aufweist.

Während früher im klinischen Labor die Konzentration beispielsweise der Bestandteile des Blutes praktisch ausschließlich mit Hilfe flüssiger Reagenzien bestimmt wurde, haben in jüngerer Zeit sogenannte trägergebundene Tests zunehmend an Bedeutung gewonnen. Bei diesen sind die Reagenzien in entsprechende Schichten eines festen Testträgers eingebettet, auf den ein Tropfen der Probe aufgebracht wird. Die Reaktion der Probe mit den Reagenzien führt zu einer nachweisbaren Veränderung, üblicherweise einen Farbumschlag, in einer Nachweisschicht.

Zu den Testträgern werden vielfach Auswertegeräte angeboten, die eine Meßeinrichtung zur Messung der nachweisbaren Veränderung aufweisen und spezifisch auf die zugehörigen Testträger abgestimmt sind. Testträger und Auswertegerät bilden ein Testträger-Analysesystem.

Um aus dem an der Nachweisschicht gemessenen Meßsignal die Konzentration eines bestimmten Bestandteiles des Blutes ("Parameter") bestimmen zu können, benötigt das Gerät Informationen. Wichtig ist vor allem die für den jeweiligen Testträger spezifische Auswertekurve, d.h. die Abhängigkeit der Konzentration C von dem Meßsignal R. Testträger werden chargenweise hergestellt, wobei es unvermeidlich ist, daß die C/R-Kurve für die unterschiedlichen Produktionschargen der Testträger verschieden ist. Die Unterschiede sind im allgemeinen so groß, daß quantitative Bestimmungen mit hoher Genauigkeit nur möglich sind, wenn das Auswertegerät Informationen über die chargenspezifische Auswertekurve der jeweiligen Testträger erhält.

Die notwendige Information über die Auswertekurve wird vielfach durch ein Kalibrationsverfahren unter Verwendung von Standardlösungen erzeugt. Die Standardlösungen enthalten eine bekannte Konzentration des zu analysierenden Bestandteils und werden - meist einmal pro Meßserie - auf einen Testträger aufgegeben. Dieser wird mit dem Auswertegerät vermessen. Die festgestellte Abweichung vom Sollwert wird bei den nachfolgenden Probenmessungen berücksichtigt. Da auf diese Weise nur jeweils ein Korrekturwert für einen Punkt auf der R/C-Kurve ermittelt wird, müssen zur Erzielung einer guten Genauigkeit mehrere Kalibrationsmessungen mit Standardlösungen verschiedener Konzentrationen durchgeführt werden. Dies ist aufwendig und kann leicht zu Fehlern führen.

Aus diesem Grund wurden bereits seit Beginn der quantitativen Testträger-Analytik Analysesysteme der eingangs bezeichneten Art vorgeschlagen, bei denen ein Codeträger verwendet wird, welcher die chargenspezifische Auswertekurve und gegebenenfalls weitere für die Auswertung benötigte Informationen enthält.

Bei einem der ersten Testträger-Analysesysteme, dessen Meß-und Auswerteschaltung noch vollständig analogelektronisch aufgebaut war, wurden als Codeträger auswechselbare Skalenscheiben für einen am Gerät vorgesehenen Drehknopf verwendet. Die darauf angebrachten Konzentrationsmarkierungen entsprachen der jeweiligen Testträgercharge.

Später wurde die Verwendung eines optisch lesbaren Strichcodes vorgeschlagen. Als Codeträger wird hier vielfach ein fotografisch belichteter Film eingesetzt, wobei die zugehörigen Auswertegeräte einen Lichtschranken-Codeleser aufweisen. Aus der EP-A-73 056 und der entsprechenden US-Patent-schrift 4 476 149 ist ein unmittelbar auf der Rückseite der Testträger angebrachter Strichcode zur optischen Auswertung bekannt.

Ein optischer Strichcode ermöglicht bei vertretbarem Aufwand nur eine verhältnismäßig geringe Informationsdichte (maximal ca. 30 bit/cm). Andererseits soll der Codeträger nicht wesentlich größer als die Testträger sein, damit er mit diesen zusammen verpackt werden kann. Infolgedessen ist die bei der Testträger-Analytik mit einem optischen Strichcode übermittelbare Informationsmenge relativ beschränkt. Außerdem steigt der konstruktive Aufwand für die Leseeinrichtung im Auswertegerät, je höher die Informationsdichte ist.

Auch Magnetcodes sind in der Testträger-Analytik bereits eingesetzt worden. In der EP-A-129 220 (US-A-4 780 283) und der EP-A-132 790 (US-A-4 578 716) ist ein Testträger-Analysesystem beschrieben, bei dem Testträger eingesetzt werden, auf deren Rückseite sich eine magnetisierbare Schicht befindet, die den Code trägt. An beiden Enden jedes Testträgers ist eine Ausnehmung vorgesehen, um die erforderlich sehr präzise Justierung des Testträgers in Relation zu dem Magnet-Lesekopf zu ermöglichen. In dem Gerät ist der Testträger mit Hilfe einer speziellen Positioniereinrichtung über eine gebogene Auflage gespannt. Dadurch wird der notwendige enge Kontakt zwischen dem Magnetkopf und der magnetisierbaren Schicht sichergestellt.

Die Relativbewegung von Magnetkopf und Codeträger (der in diesem Fall zugleich Testträger ist) erfolgt elektromotorisch mit gleichförmiger Geschwindigkeit.

Insgesamt wird bei diesem Verfahren eine hohe Informationsdichte erreicht, so daß umfangreiche Informationen in dem Codeträger gespeichert und an das Auswertegerät übermittelt werden können. Das Lesen des Magnetcodes erfordert bei den bekannten Systemen jedoch einen großen konstruktiven Aufwand, so daß die Magnetcodierung bisher nur bei aufwendigen netzbetriebenen Tischgeräten, wie sie im ärztlichen Labor eingesetzt werden, verwendet werden konnte.

Der Erfindung liegt die Aufgabe zugrunde, ein Testträger-Analysesystem zur Verfügung zu stellen, bei dem die Übermittlung einer großen Informationsmenge (z.B. mehr als 100 bit) bei geringen Kosten für den Codeträger und einfachem Aufbau des Codelesers möglich ist.

Dies wird bei einem Testträger-Analysesystem der eingangs bezeichneten Art dadurch erreicht, daß der Codeleser zum Lesen eines auf dem Codeträger vorhandenen Magnetcodes ein magnetoresistives Element als Lesekopf aufweist.

Ein magnetoresistives Element enthält eine dünne Schicht aus einem Material, dessen elektrischer Widerstand von der magnetischen Feldstärke, in der es sich befindet, abhängig ist. Entsprechend ändert sich der elektrische Widerstand, wenn eine magnetische Codierung an dem magnetoresistiven Element vorbeigeführt wird. Im Rahmen der Testträger-Analytik wird durch die Verwendung eines magnetoresistiven Elementes als Codeleser ein bedeutender Fortschritt erzielt. Im Vergleich zu den bekannten optischen Strichcodes können sehr viel größere Informationsmengen übertragen werden. Dadurch können auch kompliziert geformte Auswertekurven exakt dem Auswertegerät mitgeteilt werden, was zu einer verbesserten Genauigkeit der Analyseergebnisse führt. Es ist auch möglich, zahlreiche weitere Informationen (beispielsweise Meßzeitpunkte nach Einlegen des Testträgers oder Wellenlängen einer photometrischen Messung) mit Hilfe des Codeträgers an das Gerät zu übermitteln.

Im Vergleich zu der vorbekannten Magnetcodierung gemäß EP-A-129 220 erlaubt die Erfindung eine entscheidende Vereinfachung sowohl bezüglich der Konstruktion als auch bezüglich der Handhabung. Magnetoresistive Elemente sind kostengünstig erhältlich. Die Amplitude der Lesesignale ist von der Transportgeschwindigkeit des Codeträgers unabhängig. Deswegen ist kein elektromagnetischer Antrieb für die Relativbewegung zwischen Lesekopf und Codeträger erforderlich. Ein weiterer Vorteil ist die geringere Abhängigkeit von dem Azimutwinkel zwischen Lesekopf und Codeträger und die daraus resultierenden geringen Toleranzanforderungen an die Konstruktion des Codelesers.

Insgesamt ist es dadurch möglich, auch im Bereich kompakter batteriebetriebener Handgeräte, die bei der Patientenselbstkontrolle (insbesondere von Diabetikern) oder in kleinen dezentralen Labors benötigt werden, Codeträger-Analysesysteme anzubieten, die aufgrund der großen übertragbaren Informationsmenge sehr komfortabel und mit hoher Genauigkeit arbeiten.

Bevorzugte Ausgestaltungen beziehen sich vor allem auf das magnetoresistive Element selbst und auf dessen Halterung in dem Auswertegerät.

Bekannte magnetoresistive Elemente, die zum Lesen von magnetischen Codierungen eingesetzt werden, haben im allgemeinen einen Elementkörper aus Saphir. Für Testträger-Analysesysteme können vorteilhaft Elemente mit einem Körper aus Glas eingesetzt werden, die wesentlich kostengünstiger sind.

Vorzugsweise liegt die Spurbreite der magnetisch aktiven Zone bei maximal etwa 0,25 mm. Dadurch ergibt sich eine besonders geringe Azimutwinkelempfindlichkeit.

Die Erfindung und weitere bevorzugte Ausführungsformen werden im folgenden anhand eines in den Figuren schematisch dargestellten Ausführungsbeispiels näher erläutert; es zeigen:

Fig. 1 ein erfindungsgemäßes Testträger-Analysesystem in perspektivischer Darstellung;

Fig. 2 u. 3 ein für die Erfindung geeignetes magnetoresistives Element in Vorderansicht und Seitenansicht;

Fig. 4 einen für die Erfindung geeigneten Codeleser und Codeträger im Schnitt;

Fig. 5 einen vergrößerten Ausschnitt aus Fig. 4;

Fig. 6 eine Aufsicht auf einen Codeleser gemäß Fig.4;

Fig. 7 einen Schnitt entlang der Linie VII-VII von Fig. 6.

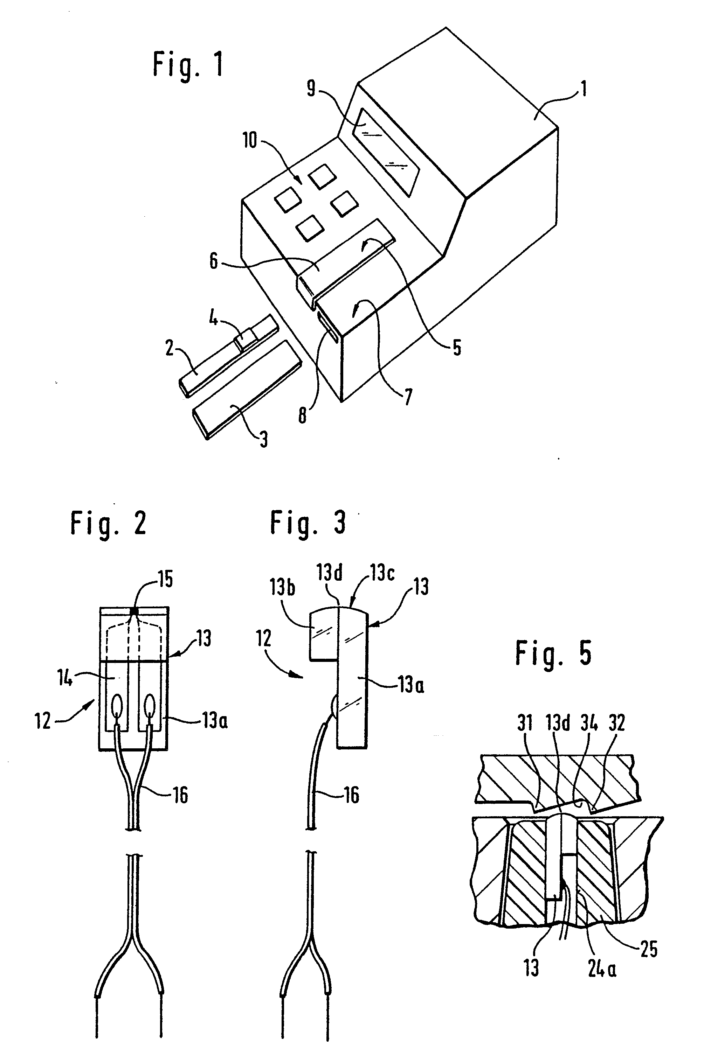

Das in Figur 1 dargestellte Testträger-Analysesystem besteht aus einem Auswertegerät 1, einem Testträger 2 und einem Codeträger 3.

Zum Nachweis einer auf der Auswerteschicht 4 infolge der Analysereaktion stattfindenden Farbänderung wird der Testträger in die Meßeinrichtung 5

des Gerätes I eingelegt, von der in der Figur nur eine Abdeckklappe zu erkennen ist. Üblicherweise enthält die Meßeinrichtung ein Reflexionsphotometer, mit der die diffuse Reflexion der Auswerteschicht 4 bei einer oder mehreren Wellenlängen vermessen wird. Einzelheiten solcher Verfahren sind für die vorliegende Erfindung (abgesehen von den oben geschilderten Besonderheiten bezüglich der Abhängigkeit der Konzentration C von dem Meßsignal R) nicht wesentlich.

Neben der Meßeinheit 5 befindet sich ein Codeleser 7. Man erkennt in der Figur dessen Einführungsöffnung 8, in die sich der Codeträger 3 einführen läßt, um einen magnetischen Code zu lesen, der in einer auf seiner Unterseite angebrachten magnetischen Beschichtung enthalten ist.

Der Codeträger hat vorzugsweise die gleiche Länge wie die Testträger 2, so daß bequem jeweils ein Codeträger in eine Testträgerpackung mit beispielsweise 25 oder 50 Testträgern verpackt werden kann. Zweckmäßigerweise sind die Codeträgerstreifen breiter (etwa doppelt so breit) als die Testträger. Dies erleichtert ihre Handhabung und die Einführung in den Codeleser. Das Meßgerät 1 enthält weitere übliche Bestandteile, insbesondere eine Meß- und Auswerteschaltung vorzugsweise in Mikroprozessortechnik. Der Mikroprozessor erlaubt es, aus den gemessenen Reflexionssignalen R mit Hilfe der auf dem Codeträger 3 gespeicherten Auswertekurve die jeweilige Konzentration zu berechnen. Das Ergebnis wird auf einem Display 9 angezeigt. Ein Tastenfeld 10 dient zum Bedienen des Gerätes. Abgesehen von den im folgenden erwähnten Besonderheiten ist das Gerät 1 konventionell aufgebaut und muß hier nicht näher erläutert werden.

Das in den Figuren 2 und 3 dargestellte magnetoresistive Codeleselement 12 hat einen Elementkörper 13 aus Glas. Er besteht aus zwei Hälften 13a und 13b, die jeweils etwa quaderförmig sind. Die Länge der einen Hälfte 13a ist erheblich größer als die der anderen 13b. Bei der Herstellung wird zunächst auf die längere Hälfte 13a eine Beschichtung 14 aufgebracht, in deren vorderstem Teil sich eine magnetisch aktive Zone 15 befindet. Sie ist in Fig. 2 wegen der besseren Erkennbarkeit schwarz hervorgehoben. In der Realität ist sie jedoch sehr klein und praktisch nicht zu erkennen. Auf die beschichtete Fläche der Hälfte 13a ist an ihrem vorderen Ende die Hälfte 13b aufgeklebt. Der fertige Elementkörper 13 ist an seiner Stirnseite 13c flach gerundet, wobei die Trennungslinie zwischen beiden Körperhälften den Scheitelpunkt 13a der Rundung markiert. An die beschichteten Elektroden sind Anschlußdrähte 16 angelötet.

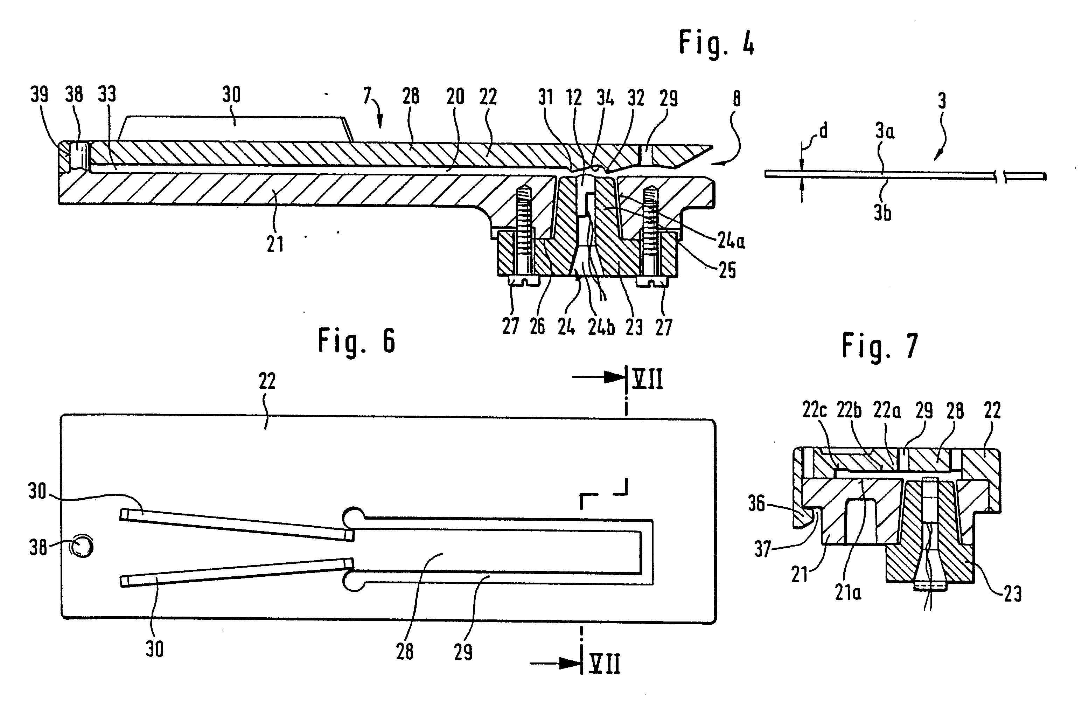

Figur 4 zeigt eine bevorzugte Ausgestatung eines Codelesers 7 und des zugehörigen Codeträgers 3. Dabei hat der Codeleser 7 einen flachen langgestreckten Führungskanal 20, in den der Codeträger 3 in seiner Längsrichtung eingeschoben werden kann. Der Codeträger 3 besteht aus einer Tragschicht 3a und einer darauf angebrachten magnetisierbaren Schicht 3b. Er ist in der Figur der besseren Erkennbarkeit halber übertrieben dick und verkürzt dargestellt. In der Realität ist der Führungskanal 20 geringfügig höher als die Stärke d des Codeträgers einschließlich der magnetisierbaren Beschichtung 3b.

Die magnetisierbare Beschichtung enthält vorzugsweise einen selbsttaktenden Code, beispielsweise einen F2F-Code mit 159 bpi. Verfahren zum Verstärken und Verarbeiten der von dem Codeleser erzeugten Signale sind dem Fachmann bekannt und müssen hier nicht erläutert werden.

Der dargestellte bevorzugte Codeleser besteht im wesentlichen, wie aus den Figuren 4 bis 7 zu ersehen ist, aus nur drei Teilen, nämlich einem Basisteil 21, einem Deckelteil 22 und einem Halteteil 23 für das magnetoresistive Element 12.

Das Halteteil 23 besteht aus einem elastisch deformierbaren Kunststoffmaterial. Es hat eine Ausnehmung 24, die in ihrem vorderen, dem Führungskanal 20 zugewandten Teil 24a eine an dem Elementkörper 13 angepaßte Querschnittsgestaltung hat, während sich sein hinterer Teil 24b konisch erweitert.

Als besonders zweckmäßig hat sich erwiesen, wenn der vordere Teil 24a der Ausnehmung 24 einen geringfügig kleineren Querschnitt als der Körper 13 des Leseelementes 12 hat, so daß das elastische Halteteil 23 beim Einstecken des Elementes 12 in die Ausnehmung 24 leicht deformiert wird. Dadurch läßt sich die Position des Elementes 12 in Längsrichtung sehr exakt justieren, indem man es in die Ausnehmung 24 so weit eindrückt, daß es die gewünschte Position hat, wobei ein entsprechendes Hilfswerkzeug mit einer Justier-Anschlagfläche verwendet werden kann. Durch die elastische Deformierung des Halteteils 23 ist das Element 13 in der Ausnehmung 24 fixiert. Zweckmäßigerweise wird es zusätzlich dadurch gesichert, daß in die Ausnehmung 24 ein Tropfen Klebstoff eingeführt wird.

Auf diese Weise erhält man mit sehr geringem Aufwand eine exakte Positionierung des Codeleselementes 12 in dem Halteteil 23.

Um das Halteteil 23 seinerseits exakt in dem Basisteil 21 zu positionieren, greift es mit einem leicht konischen Vorsprung 25 in eine entsprechende Ausnehmung des Basisteils ein, wobei die Eindringtiefe durch eine im vorliegenden Fall ringförmige Anschlagfläche 26 exakt definiert ist. In dieser Position wird es durch die Schrauben 27 fixiert.

Vorzugsweise besteht das Basisteil 21 und evtl. auch weitere Teile des Codelesers aus einem elektrisch leitenden Kunststoffmaterial. Dadurch werden statische Aufladungen, die das Lesen des Magnetcodes beeinträchtigen könnten, abgeleitet. Der spezifische elektrische Widerstand des Materials sollte weniger als $10^4$ Ohm/cm$^3$ betragen.

Für die Funktion der Codelesung mit dem magnetoresistiven Element ist wesentlich, daß das Element und der Codeträger verhältnismäßig fest (Andruckkraft mindestens 1 N) federnd relativ zueinander angedrückt werden. Dies läßt sich beispielsweise dadurch erreichen, daß der Codeträger unelastisch in seiner Längsrichtung geführt und das Codeleseelement federnd gelagert ist. Besonders bevorzugt ist jedoch eine Konstruktion, bei der das Codeleseelement in seiner Position in Richtung auf den Codeträger fixiert ist und die Führung des Codeträgers im Bereich des Codeleseelementes eine Vorrichtung aufweist, um den Codeträger gegen das Codeleseelement 13 zu drücken.

Im dargestellten Ausführungsbeispiel wird dies in besonders einfacher und zweckmäßiger Weise erreicht.

Das Deckelteil 22 weist eine lange federnde Kunststoffzunge 28 auf. Zweckmäßigerweise ist das Deckelteil 22 im Spritzgießverfahren hergestellt, wobei ein entsprechender U-förmiger Spalt 29 ausgespart wird. Um eine ausreichende Elastizität zu erreichen, erstreckt sich die Zunge 28 längs des Führungskanals 20 über einen erheblichen Teil der Länge, mindestens etwa 2 cm. Der in Verlängerung der Zunge 28 liegende Abschnitt des Deckelteils 22 ist mit Verstärkungsrippen 30 verstärkt. Dadurch wird die Reproduzierbarkeit der Federkraft der Zunge 28 verbessert.

Vorzugsweise sind zwei vorspringende Andrückelemente 31, 32 vorgesehen, die den Codeträger in dem Führungskanal 20 von seiner Rückseite her gegen das Codeleseelement 13 drücken. Sie sind in Längsrichtung des Kanals 20 versetzt angeordnet, d.h. eines der Elemente ist näher an der Einführungsöffnung 8, das andere näher an dem Ende 33 des Führungskanals.

Zwischen beiden Andrückelementen 31, 32 befindet sich eine Vertiefung 34, so daß ein in dem Führungskanal bewegter Codeträger vor und hinter dem Scheitelpunkt 13d der Stirnfläche des magnetoresistiven Elementes 13, jedoch nicht an dessen Position von hinten unterstützt wird. Dadurch ergibt sich eine Verbesserung der Lesegenauigkeit.

Bei der Testträger-Analytik ist es aus Handhabungsgründen wünschenswert, daß der Codeträger in den Codeleser manuell eingeschoben werden kann. In dieser Hinsicht sind weitere bevorzugte Maßnahmen förderlich.

Die Tragschicht 3a des Testträgers muß ausreichend steif sein, um den Codeträger an einem Ende handhaben und in Längsrichtung in den Codeleser einschieben zu können. Um dies sicherzustellen, besteht die Tragschicht 3a aus einem verhältnismäßig festen Kunststoffmaterial, wie beispielsweise Polyester und hat eine Mindeststärke von 0,2 mm, besonders bevorzugt 0,3 mm.

Weiterhin ist es in dieser Hinsicht vorteilhaft, wenn die Andrückelemente 31, 32 in der Weise asymmetrisch geformt sind (Fig. 5), daß ihre Oberfläche zu der Einführungsöffnung 8 hin einen spitzeren Winkel zur Längsachse des Führungskanals 20 hat als zu dem Ende 33 des Führungskanals hin.

Eine ausreichende seitliche Führung des Codeträgers 8 läßt sich dadurch erreichen, daß die Breite des Führungskanals 20 mit geringem Spiel auf die Breite des Codeträgers 8 abgestimmt ist. Herstellungstechnisch zweckmäßig ist die in Fig. 6 dargestellte Konstruktion, bei der die die lesekopfseitige Wand 21a bildende Oberfläche des Basisteils 21 im wesentlichen flach ist. Die dem Lesekopf gegenüberliegende Wand 22a des Führungskanals 20 wird von einer Oberfläche des Deckelteils gebildet, die eine dem gewünschten Führungskanalprofil entsprechende Vertiefung aufweist. Am Rande der Vertiefung 22b befindet sich eine nochmals vertiefte Nut 22c, die sich als zweckmäßig erweist, um herstellungsbedingte Grate am Rand des Codeträgers 3 aufzunehmen und dadurch eine exakte Führung sicherzustellen.

Das Deckelteil 22 ist mit Hilfe elastischer Nasen 36, die in entsprechende Vertiefungen 37 des Basisteils 21 eingreifen, mit diesem verbunden. Dabei wird die exakte Positionierung des Deckelteils dadurch verbessert, daß das Basisteil 21 einen Justierzapfen 38 aufweist, der in ein exakt passendes Justierloch 39 des Deckelteils eingreift.

**Ansprüche**

1. Testträger-Analysesystem zur Analyse von Bestandteilen einer flüssigen Probe, insbesondere einer Körperflüssigkeit mit
Testträgern (2), welche in einer oder mehreren Testschichten Reagenzien enthalten, wobei die Reaktion der Reagenzien mit dem Bestandteil zu einer physikalisch nachweisbaren Veränderung einer Nachweisschicht (4) führt,
einem Codeträger (3), der Informationen zur Auswertung der nachweisbaren physikalischen Veränderung und Bestimmung der Konzentration des zu analysierenden Bestandteils enthält und
einem Auswertegerät (1), das eine Meßeinrichtung (5) zum Messen der nachweisbaren Veränderung und Erzeugen eines Meßsignals, einen Codeleser (7) zum Lesen der auf dem Codeträger (3) gespeicherten Information und eine Meß- und Auswerteschaltung zur Auswertung des Meßsignals und Ermittlung der Konzentration des zu analysierenden Bestandteils mit Hilfe der gespeicherten Information, aufweist,
**dadurch gekennzeichnet, daß**
der Codeleser zum Lesen eines auf dem Codeträger (3) vorhandenen Magnetcodes ein magnetoresistives Element (12) als Lesekopf aufweist.

2. Testträger-Analysesystem nach Anspruch 1,
**dadurch gekennzeichnet, daß** das Auswertegerät
(1) als kompaktes batteriebetriebenes Handgerät
ausgebildet ist.

3. Testträger-Analysesystem nach Anspruch 1,
**dadurch gekennzeichnet, daß** das magnetoresistive Element (12) einen Glaskörper (13) aufweist.

4. Testträger-Analysesystem nach Anspruch 1,
**dadurch gekennzeichnet, daß** die Spurbreite der
magnetisch aktiven Zone (15) des magnetoresistiven Elementes (12) maximal etwa 0,25 mm beträgt.

5. Testträger-Analysesystem nach Anspruch 1,
**dadurch gekennzeichnet, daß** die Führung des
Codeträgers (3) in dem Codeleser (7) ein Teil (21)
aus einem elektrisch leitenden Kunststoff einschließt.

6. Testträger-Analysesystem nach Anspruch 1,
**dadurch gekennzeichnet, daß** der Codeträger (3)
als Streifen mit einer auf einer flachen Tragschicht
(3a) aufgebrachten magnetisierbaren Schicht (3b)
ausgebildet ist, wobei die Tragschicht (3a) eine
ausreichende Steifigkeit hat, um den Codestreifen
an einem Ende zu handhaben und in Längsrichtung in den Codeleser einzuschieben.

7. Testträger-Analysesystem nach Anspruch 1
oder 6, **dadurch gekennzeichnet, daß** der Codeleser (7) einen flachen Führungskanal (20) für den
Codeträger (3) aufweist, in welchem das magnetoresistive Element (12) und der Codeträger (3) federnd relativ zueinander angedrückt werden.

8. Testträger-Analysesystem nach Anspruch 7,
**dadurch gekennzeichnet, daß** an dem Führungskanal (20) zwei vorspringende Andrückelemente
(31, 32) derartig gegenüber der Position des magnetoresistiven Elementes (12) in Längsrichtung
des Kanals (20) versetzt angeordnet sind, daß die
Rückseite des Codeträgers (3) in Längsrichtung
des Kanals vor und hinter der Auflagelinie des
Scheitelpunktes (13d) des magnetoresistiven Elementes (12) unterstützt, dazwischen jedoch frei ist.

9. Testträger-Analysesystem nach Anspruch 7,
**dadurch gekennzeichnet, daß** der Codeleser (7)
ein Basisteil (21) aufweist, das die lesekopfseitige
Wand (21a) des Führungskanals (20) bildet und
das magnetoresistive Element (12) in einem von
dem Basisteil (21) gesonderten Halteteil (23) gehaltert ist.

10. Testträger-Analysesytem nach Anspruch 8,
**dadurch gekennzeichnet, daß** die dem Lesekopf
(12) gegenüberliegende Wand (22a) des Führungskanals (20) eine elastisch federnde Zunge (30) aus
Kunststoff einschließt, an der die Andrückelemente (31,32) angebracht sind.

Fig. 1

Fig. 2     Fig. 3

Fig. 5

BM 3138 / 00

Fig. 4

Fig. 6

Fig. 7

EP 0 376 109 A2

BM 3138 / 00